# EUROPEAN PATENT SPECIFICATION

(11) **EP 0 289 326 B1**
(45) Date of publication and mention of the grant of the patent: **20.01.1993**
(21) Application number: 88303876.2
(22) Date of filing: 28.04.1988
(51) Int. Cl.: H04N 9/80

(54) **Magnetic recording and reproducing apparatus**
Magnetische Aufzeichnungs- und Wiedergabevorrichtung
Dispositif d'enregistrement et de reproduction magnétique

(30) Priority: 28.04.1987 JP 105447/87; 19.08.1987 JP 206016/87
(43) Date of publication of application: 02.11.1988
(73) Proprietor: VICTOR COMPANY OF JAPAN, LIMITED, Kanagawa-ku Yokohama (JP)
(72) Inventor: Tsuruta, Masahiko, Yokohama (JP); Shibayama, Kenji, Tokyo (JP); Kido, Kouichi, Yokosuka-shi Kanagawa-ken (JP)
(74) Representative: Senior, Alan Murray

(56) References cited:
- EP-A- 0 154 221
- DE-A- 3 113 799
- US-A- 4 490 749
- US-A- 4 630 131

## Description

This invention relates to a magnetic recording and reproducing apparatus such as a video tape recorder (VTR).

In high picture quality VTRs, a luminance signal lies in a wide band including a band of a carrier chrominance signal. During a reproduction process, inadequate separation between the luminance signal and the carrier chrominance signal causes the carrier chrominance signal to contain a component of the luminance signal. The luminance signal component in the carrier chrominance signal interferes with the reproduced luminance signal, causing noises or other unwanted phenomena in reproduced pictures and images.

US-A-4,490,749 discloses a VTR of this type in which a pilot signal is selectively added to the multiplexed signal to identify the start of the phase variation cycle of the colour signal.

It is an object of this invention to provide a magnetic recording and reproducing apparatus which enables a high picture quality.

According to the present invention there is provided a magnetic recording apparatus wherein a frequency-modulated luminance signal and a frequency-lowered colour signal are combined into a frequency-division multiplexed signal through a frequency-division multiplexing process, the frequency-modulated luminance signal being derived from a luminance signal through a frequency modulation process, the frequency-lowered colour signal being derived from a carrier chrominance signal through a frequency-down conversion process, the frequency-division multiplexed signal being recorded onto a magnetic recording medium, and wherein a part of the luminance signal has a frequency equal to or greater than the colour subcarrier frequency;
characterised by means for selectively adding a pilot signal to the signal to be recorded according to whether or not a quantity of a high-frequency luminance signal component contained in the colour signal in the signal to be recorded is smaller than a reference quantity. During reproduction, a cutoff frequency of a high pass filter may be varied in accordance with whether the pilot signal is present in or absent from a signal reproduced from the magnetic recording medium, the high pass filter separating a reproduced luminance signal from a frequency-division multiplexed signal reproduced from the magnetic recording medium.

The present invention will be further described hereinafter with reference to the following description of exemplary embodiments and the accompanying drawings, in which:
Fig. 1 is a block diagram of a recording section of an apparatus according to a first embodiment of this invention.
Fig. 2 is a block diagram of a reproducing section of the apparatus according to the first embodiment of this invention.
Fig. 3 is a diagram of frequency spectrums of signals which appear in the recording section of Fig. 1.
Fig. 4 is a diagram of frequency characteristics of the high pass filters of Fig. 2.
Fig. 5 is a block diagram of an essential part of the recording section of Fig. 1.
Fig. 6 is a diagram of waveforms of signals which appear in the recording section of Fig. 5.
Fig. 7 is a block diagram of an essential part of the reproducing section of Fig. 2.
Fig. 8 is a diagram of waveforms of signals which appear in the reproducing section of Fig. 7.
Fig. 9 is a block diagram of a recording section of an apparatus according to a second embodiment of this invention.
Fig. 10 is a block diagram of a recording section of an apparatus according to a third embodiment of this invention.
Fig. 11 is a block diagram of a recording section of an apparatus according to a fourth embodiment of this invention.
Fig. 12 is a block diagram of a reproducing section of the apparatus according to the fourth embodiment of this invention.
Fig. 13 is a block diagram of a recording section of an apparatus according to a fifth embodiment of this invention.
Fig. 14 is a block diagram of the level detector of Fig. 13.
Fig. 15 is a block diagram of a recording section of an apparatus according to a sixth embodiment of this invention.
Fig. 16 is a diagram showing phases of pilot signals and burst signals which appear in the recording section of Fig. 15.
Fig. 17 is a block diagram of an essential part of the recording section of Fig. 15.
Fig. 18 is a diagram of waveforms of signals which appear in the recording section of Fig. 17.
Fig. 19 is a block diagram of an essential part of a reproducing section of the sixth embodiment of this invention.
Fig. 20 is a diagram of waveforms of signals which appear in the reproducing section of Fig. 19.
Fig. 21 is a diagram showing phases of pilot signals and a reference signal which appear in the reproducing section of Fig. 19.
Fig. 22 is a block diagram of a reproducing section of an apparatus according to a seventh embodiment of this invention.
Fig. 23 is a block diagram of a recording section of an apparatus according to an eighth embodiment of this invention.

### FIRST EMBODIMENT

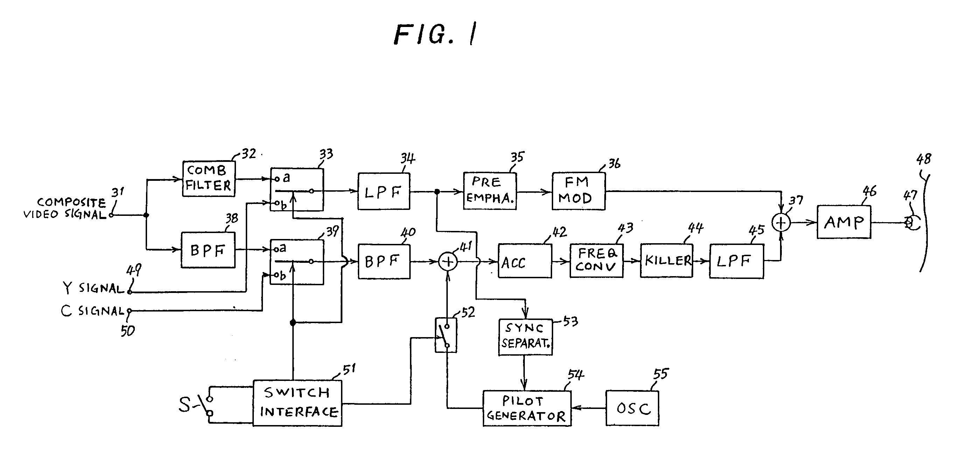

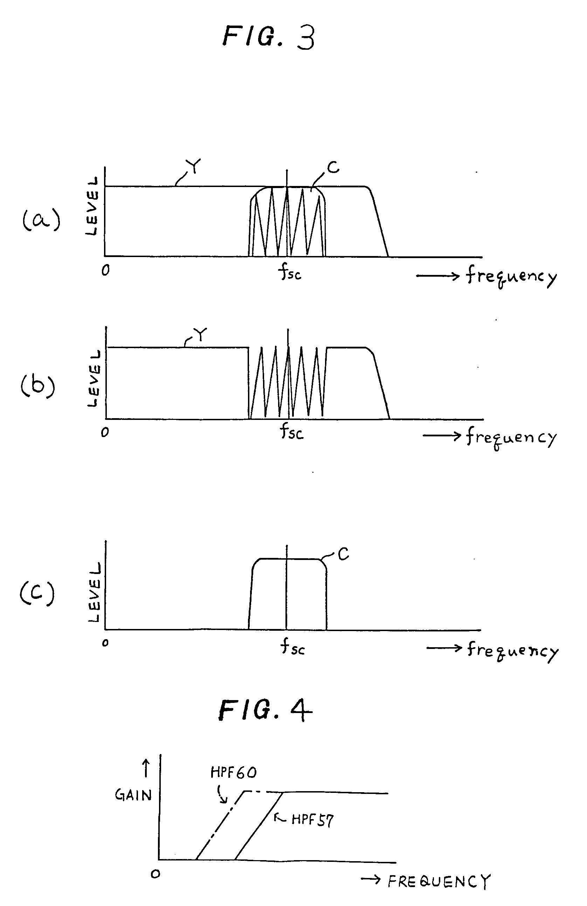

As shown in Fig. 1, a recording section of an apparatus includes an input terminal 31 receiving a composite video signal. As shown in Fig. 3(a), the composite video signal includes a luminance signal (Y signal) Y and a carrier chrominance signal (C signal) C. The luminance signal Y lies in a wide band. The carrier chrominance signal C lies in a band extending in a high-frequency range of the luminance signal band. The width of the luminance signal band equals a value, for example, 5 MHz, which is greater than the color subcarrier frequency fsc.

The composite video signal is fed from the input terminal 31 to a comb filter 32 which separates the luminance signal Y (see Fig. 3(b)) from the carrier chrominance signal C. The luminance signal Y is fed to a first input terminal "a" of a switch 33. After passing through the switch 33, the luminance signal Y is fed to an FM modulator 36 via a low pass filter 34 and a preemphasis circuit 35. The FM modulator 36 converts the luminance signal Y into a corresponding FM luminance signal, which is fed to a mixer 37.

The composite video signal is also fed from the input terminal 31 to a band pass filter 38, which derives the carrier chrominance signal C (see Fig. 3(c)) from the composite video signal. It should be noted that an output signal from the band pass filter 38 contains the carrier chrominance signal C and also a high-frequency component of the luminance signal Y. The output signal from the band pass filter 38 is applied to a first input terminal "a" of a switch 39. After passing through the switch 39, the carrier chrominance signal C is fed to a first input terminal of a mixer 41 via a band pass filter 40.

As will be described hereinafter, a second input terminal of the mixer 41 can receive a pilot signal. When the mixer 41 receives the pilot signal, the mixer 41 adds the pilot signal to the carrier chrominance signal C. In the case of a PAL system, the pilot signal is in the form of a burst signal having a color subcarrier frequency of about 4.43 MHz. The pilot signal is added to portions of the carrier chrominance signal corresponding to horizontal or vertical blanking periods.

The carrier chrominance signal is outputted from the mixer 41 to a frequency down converter 43 via an automatic chroma control (ACC) circuit 42. The frequency down converter 43 changes the carrier chrominance signal into a corresponding frequency-lowered chrominance signal, which is fed to the mixer 37 via a color killer circuit 44 and a low pass filter 45. The killer circuit 44 acts when a black-and-white signal is recorded. A frequency-division multiplexed signal outputted from the mixer 37 is fed to a magnetic head 47 via a recording amplifier 46. The magnetic head 47 records the frequency-division multiplexed signal in a magnetic tape 48.

The luminance signal outputted from the low pass filter 34 is applied to a sync separator 53. The sync separator 53 extracts a horizontal sync signal from the luminance signal and outputs the horizontal sync signal to a pilot signal generator 54. A crystal oscillator 55 generates a signal having a constant frequency of, for example, about 4.43 MHz, which is applied to the pilot signal generator 54. The pilot signal generator 54 produces the pilot signal on the basis of the horizontal sync signal and the constant-frequency signal. The pilot signal can be transferred from the pilot signal generator 54 to the mixer 41 via a switch 52.

Input terminals 49 and 50 are used for component video signals. Specifically, the input terminal 49 receives a luminance signal (Y signal) Y. The input terminal 50 receives a carrier chrominance signal (C signal) C. The received luminance signal Y is applied to a second input terminal "b" of the switch 33. The received carrier chrominance signal C is applied to a second input terminal "b" of the switch 39.

The switches 33 and 39, and the switch 52 are controlled via signals supplied from a switch interface 51. The switch interface 51 generates the control signals in accordance with the state of a manual switch S. When the composite video signal applied to the input terminal 31 is recorded, the switch S is changed to a position at which the first input terminals "a" are connected to output terminals of the switches 33 and 39 and the switch 52 is conductive. In this case, the pilot signal is fed from the pilot signal generator 54 to the mixer 41. When the component video signals applied to the input terminals 49 and 50 are recorded, the switch S is changed to a position at which the second input terminals "b" are connected to the output terminals of the switches 33 and 39 and the switch 52 is nonconductive. In this case, the feed of the pilot signal to the mixer 41 is inhibited.

It is preferable that the addition of a pilot signal is enabled and disabled in accordance with the quantity of luminance signal components in the carrier chrominance signal. Specifically, when the quantity of luminance signal components in the carrier chrominance signal is equal to or greater than a reference quantity, the addition of the pilot signal is enabled by handling the switch S. When the quantity of luminance signal components in the carrier chrominance signal is smaller than the reference quantity, the addition of the pilot signal is inhibited by handling the switch S.

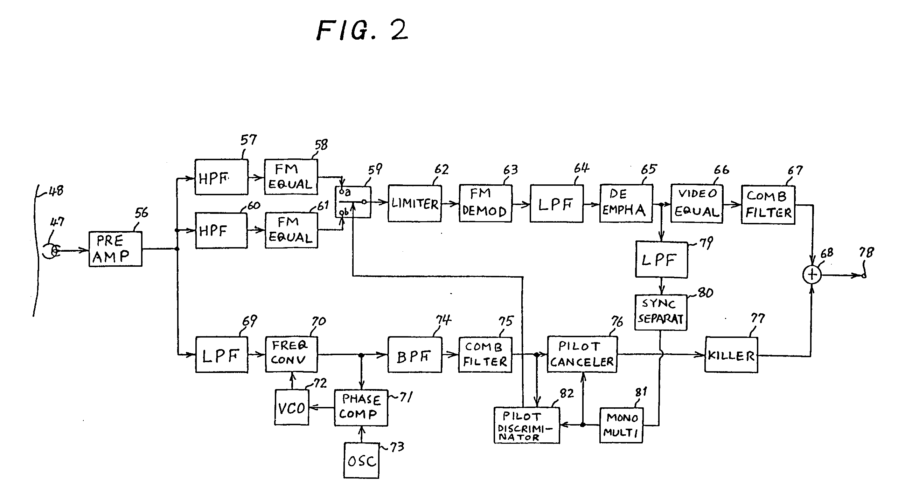

As shown in Fig. 2, a reproducing section of the apparatus includes the magnetic head 47 reproducing a recorded signal from the magnetic tape 48. The reproduced signal is fed to a high pass filter 57 via a preamplifier 56. The high pass filter 57 extracts a first FM luminance signal from the reproduced signal. The first FM luminance signal is fed to a first input terminal "a" of a switch 59 via an FM equalizer 58. The reproduced signal is also applied from the preamplifier 56 to a high pass filter 60, which extracts a second FM luminance signal from the reproduced signal. The second FM luminance signal is fed to a second input terminal "b" of the switch 59 via an FM equalizer 61.

As shown in Fig. 4, the cutoff frequency of the high pass filter 57 is higher than the cutoff frequency of the high pass filter 60. The characteristics of the FM equalizers 58 and 61 are designed so as to match the characteristics of the high pass filters 57 and 60 respectively.

The switch 59 selects one of the first and second FM luminance signals and passes the selected signal to a limiter 62. As will be described hereinafter, the switch 59 is changed via a control signal outputted from a pilot signal discriminator 82. After processed in the limiter 62, the FM luminance signal is converted back into a luminance signal by an FM demodulator 63. The luminance signal is transferred from the FM demodulator 63 to a mixer 68 via a low pass filter 64, a deemphasis circuit 65, a video equalizer 66, and a comb filter 67.

The reproduced signal is also applied from the preamplifier 56 to a low pass filter 69, which extracts a frequency-lowered chrominance signal from the reproduced signal. A frequency up converter 70 changes the frequency-lowered chrominance signal back to a carrier chrominance signal. The frequency converter 70, a phase comparator 71, a voltage-controlled oscillator 72, and a crystal oscillator 73 form an APC loop which removes time axis variations from the carrier chrominance signal, that is, which performs time base corrections on the carrier chrominance signal. The carrier chrominance signal is transferred from the frequency converter 70 to a pilot signal canceler 76 via a band pass filter 74 and a comb filter 75. In cases where a pilot signal was added to a chrominance signal during a recording process, the circuit 76 removes the pilot signal from the chrominance signal. An output signal from the pilot signal canceler 76 is fed to the mixer 68 via a color killer circuit 77. The device 68 mixes the luminance signal and the chrominance signal, forming a composite video signal which is transferred via an output terminal 78. The comb filter 75 removes crosstalk components and high-frequency luminance signal components from the carrier chrominance signal.

The luminance signal outputted from the deemphasis circuit 65 is fed to a sync separator 80 via a low pass filter 79. The sync separator 80 extracts a horizontal sync signal from the luminance signal. A monostable multivibrator 81 generates a gate signal in accordance with the horizontal sync signal, the gate signal being outputted to the pilot signal canceler 76 and the pilot signal discriminator 82. The pilot signal discriminator 82 is supplied with the reproduced chrominance signal from the comb filter 75, discriminating the pilot signal in the reproduced chrominance signal at timings determined by the gate signal supplied from the monostable multivibrator 81. The pilot signal discriminator 82 generates a control signal which depends on whether or not the pilot signal is contained in the reproduced chrominance signal, that is, whether a recorded signal which is being reproduced results from recording of a composite video signal or recording of component video signals. The control signal is outputted from the pilot signal discriminator 82 to the switch 59. When the pilot signal is detected in the reproduced chrominance signal, that is, when the recorded signal which is being reproduced results from recording of the composite video signal, the first input terminal "a" is connected to an output terminal of the swich 59 so that the switch 59 selects the first FM luminance signal and passes it to the limiter 62. When the pilot signal is absent from the reproduced chrominance signal, that is, when the recorded signal which is being reproduced results from recording of the component video signals, the second input terminal "b" is connected to the output terminal of the swich 59 so that the switch 59 selects the second FM luminance signal and passes it to the limiter 62.

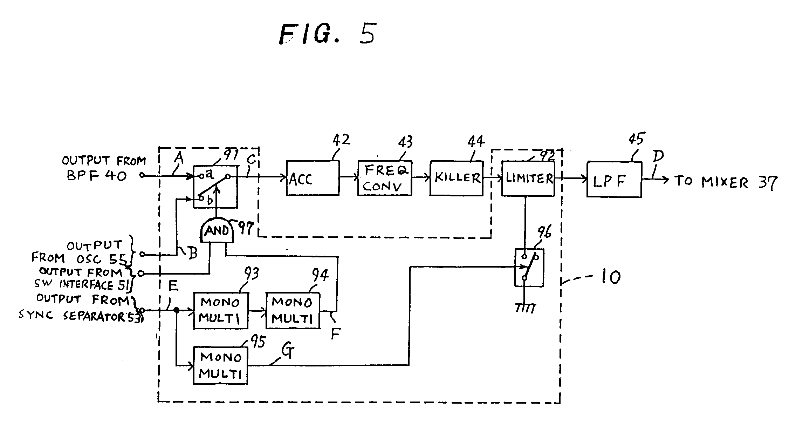

The recording section will be desribed further. As shown in Fig. 5, the recording section includes a circuit 10 corresponding to the mixer 41 (see Fig. 1), the switch 52 (see Fig. 1), and the pilot signal generator 54 (see Fig. 1).

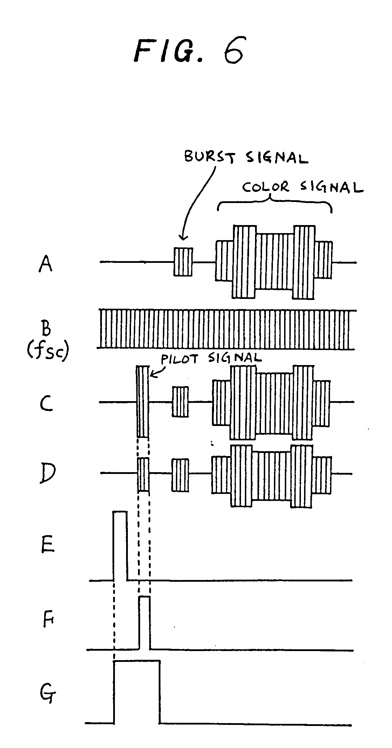

The chrominance signal (see Fig. 6(A)) outputted from the band pass filter 40 (see Fig. 1) is applied to a first input terminal "a" of a switch 91 within the circuit 10. The output signal fsc (see Fig. 6(B)) from the crystal oscillator 55 (see Fig. 1) is applied to a second input terminal "b" of the switch 91. The signal fsc is locked to the color burst signal recorded via the APC circuit. An output terminal of the switch 91 is connected to the ACC circuit 42.

When a gate signal (see Fig. 6(F)) described hereinafter is fed to the switch 91, the second input terminal "b" is connected to the output terminal of the switch 91 so that the signal fsc is passed to the ACC circuit 42. When a gate signal is removed from the switch 91, the first input terminal "a" is connected to the output terminal of the switch 91 so that the chrominance signal is passed to the ACC circuit 42. In this way, the signal fsc is added to the chrominance signal as a pilot signal. The level of the added pilot signal is higher than the level of the color burst signal in the standard video signal by approximately 6 dB.

An output signal (see Fig. 6(C)) from the switch 91 is fed to a limiter 92 within the circuit 10 via the ACC circuit 42, the frequency converter 43, and the killer circuit 44. The device 92 limits the amplitude of the pilot signal in the chrominance signal to a level which is substantially equal to the level of the color burst signal. An output signal from the limiter 92 is inputted into the low pass filter 45. An output signal (see Fig. 6(D)) from the low pass filter 45 is fed to the mixer 37 (see Fig. 1).

A combination of monostable multivibrators 93 and 94 within the circuit 10 generates a gate signal (see Fig. 6(F)) on the basis of the horizontal sync signal (see Fig. 6(E) outputted from the sync separator 53 (see Fig. 1). The gate signal is outputted from the monostable multivibrator 94 to a first input terminal of an AND gate 97. A second input terminal of the AND gate 97 is subjected to a control signal from the switch interface 51 (see Fig. 1). An output terminal of the AND gate 97 is connected to the switch 91. The control signal outputted from the switch interface 51 (see Fig. 1) to the AND gate 97 selectively opens and closes the AND gate 97, allowing and inhibiting the transmission of the gate signal from the monostable multivibrator 94 to the switch 91. The gate signal serves as a timing pulse.

A monostable multivibrator 95 within the circuit 10 generates a gate signal (see Fig. 6(G)) on the basis of the horizontal sync signal (see Fig. 6(E)) outputted from the sync separator 53 (see Fig. 1). The gate signal is outputted from the monostable multivibrator 95 to a switch 96. The state of the switch 96 depends on the applied gate signal. The limiter 92 is enabled and disabled in accordance with the state of the switch 96. Accordingly, the limiter 92 is enabled and disabled in accordance with the gate signal applied to the switch 96. As shown in Fig. 6(G), the gate signal includes a timing pulse designed so as to limit the pilot signal only. The timing gate pulse lasts for a period containing the period during which the pilot signal is added to the chrominance signal.

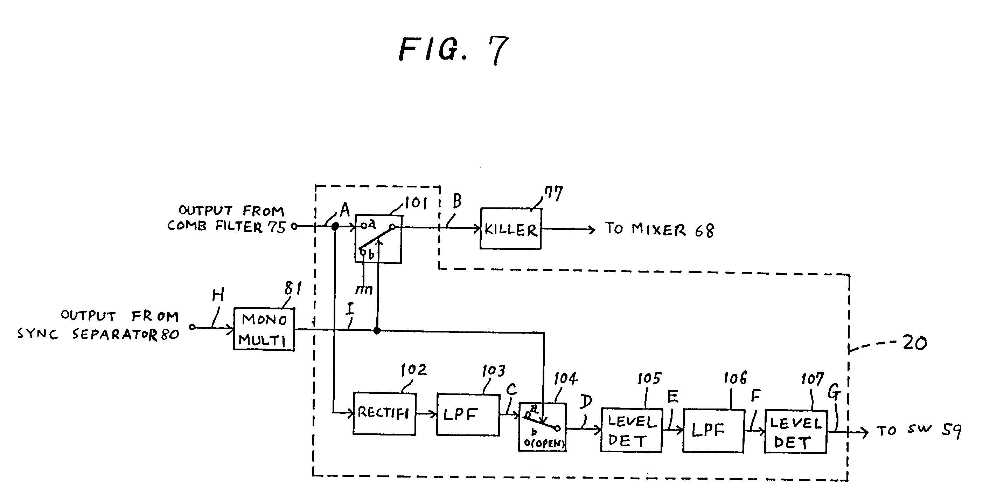

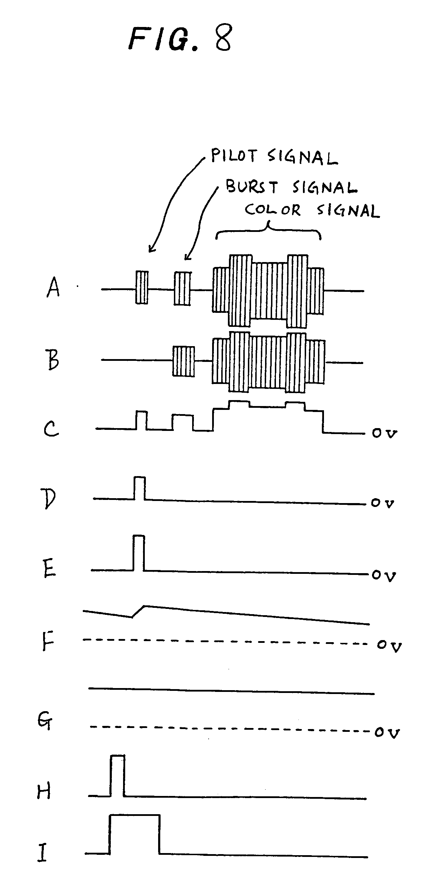

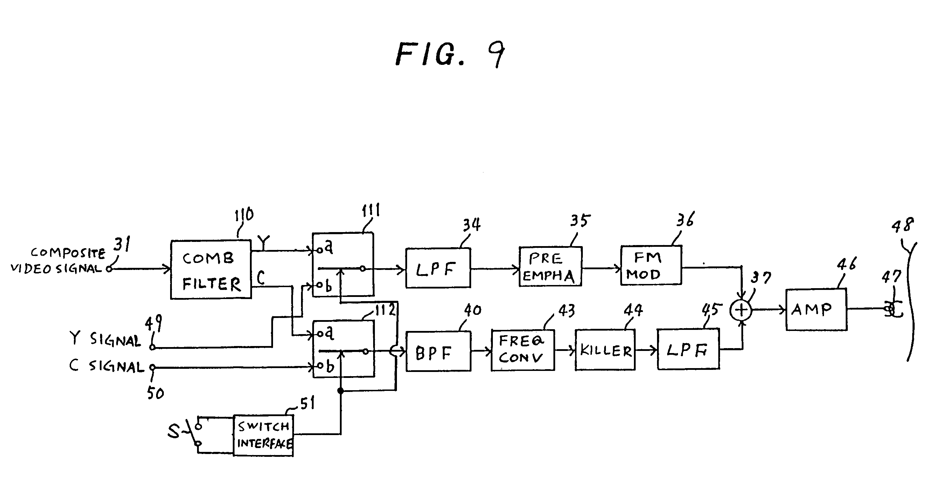

The reproducing section will be described further. As shown in Fig. 7, the reproducing section includes a circuit 20 corresponding to the pilot signal canceler 76 (see Fig. 2) and the pilot signal discriminator 82 (see Fig. 2).

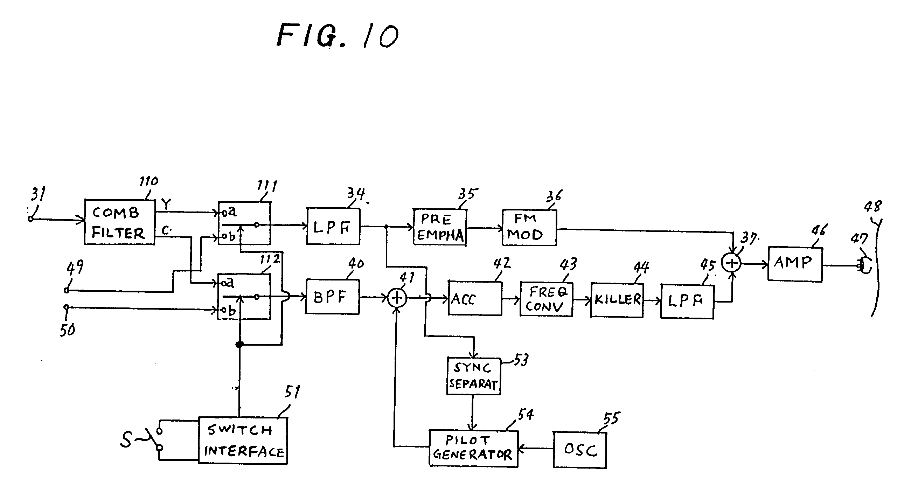

The reproduced chrominance signal (see Fig. 8(A)) outputted from the comb filter 75 (see Fig. 2) is applied to a first input terminal "a" of a switch 101 within the circuit 20. A second input terminal "b" of the switch 101 is grounded. An output terminal of the switch 101 is connected to the killer circuit 77.

When a gate signal (see Fig. 8(I)) described hereinafter is fed to the switch 101, the output terminal of the switch 101 is connected to its second input terminal "b" and is thus grounded to remove the pilot signal from the chrominance signal. An output signal (see Fig. 8(B) from the switch 101 which has no pilot signal is supplied to the mixer 68 (see Fig. 2) via the killer circuit 77.

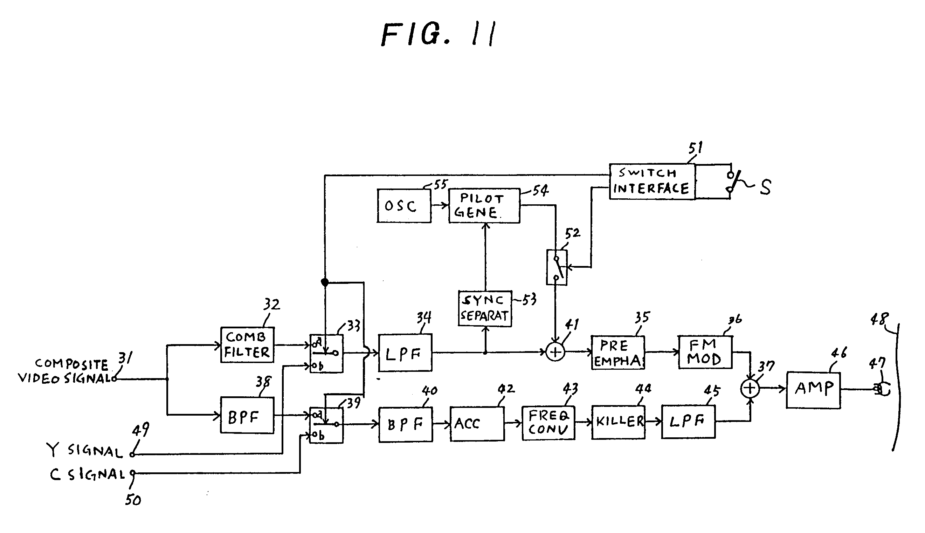

The monostable multivibrator 81 generates a gate signal (see Fig. 8(I)) on the basis of the horizontal sync signal (see Fig. 9(H)) outputted from the sync separator 80 (see Fig. 2). The gate signal is outputted from the monostable multivibrator 81 to the switch 101. In addition, the gate signal outputted from the monostable multivibrator 81 is applied to a switch 104 within the circuit 20. The gate signal serves as a timing pulse changing the states of the switches 101 and 104. The monostable multivibrator 81 is similar to the monostable multivibrator 95 of Fig. 5.

The reproduced chrominance signal (see Fig. 8(A)) outputted from the comb filter 75 (see Fig. 1) is subjected to a half-wave rectification process by a rectifier 102 within the circuit 20. A low pass filter 103 damps a component of the output signal from the rectifier 102 which has a frequency equal to the frequency of the pilot signal, that is, 4.43 MHz. An output signal (see Fig. 8(C)) from the low pass filter 103 is applied to a first input terminal "a" of the switch 104. A second input terminal "b" of the switch 104 is open. An output terminal of the switch 104 is connected to a level detector 105.

The output terminal of the switch 104 is selectively connected to its first input terminal "a" in accordance with the applied gate signal so that the envelope of the added pilot signal is extracted from the reproduced chrominance signal. As shown in Fig. 8(D), the output signal from the switch 104 represents the extracted envelope of the pilot signal.

The output signal from the switch 104 is applied to the level detector 105. The level detector 105 compares the level of the envelope of the pilot signal with a reference level. An output signal (see Fig. 8(E)) from the level detector 105 assumes a high potential when the level of the envelope of the pilot signal is equal to or higher than the reference level. The output signal (see Fig. 8(E)) from the level detector 105 assumes a low potential when the level of the envelope of the pilot signal is smaller than the reference level.

The output signal from the level detector 105 is transferred to a second level detector 107 via a low pass filter 106 having a time constant equal to or greater than several tens of milliseconds. The level detector 107 compares the level of the output signal (see Fig. 8(F)) from the low pass filter 106 with a reference level. An output signal (see Fig. 8(G)) from the level detector 107 assumes a high potential when the level of the output signal from the low pass filter 106 is equal to or higher than the reference level. The output signal (see Fig. 8(G)) from the level detector 107 assumes a low potential when the level of the output signal from the low pass filter 106 is smaller than the reference level. The output signal from the level detector 107 is applied to the switch 59 (see Fig. 2) as a control signal.

As described previously, a pilot signal is added to a chrominance signal when an input composite video signal is recorded. No pilot signal is added to the chrominance signal when input component video signals are recorded.

During the reproduction of a signal caused by recording of a composite video signal, the pilot signal discriminator 82 detects the pilot signal in the chrominance signal so that the switch 59 selects the first FM luminance signal and passes it to the limiter 62. Accordingly, in this case, the luminance signal processed by the high pass filter 57 of the high cutoff frequency is selected and is used to form a final video signal. The processing of the luminance signal by the high pass filter 57 of the high cutoff frequency prevents or reduces unwanted interference between high-frequency components of the luminance signal and luminance signal components in the chrominance signal.

During the reproduction of a signal caused by recording of component video signals, the pilot signal discriminator 82 does not detect any pilot signal so that the switch 59 selects the second FM luminance signal and passes it to the limiter 62. Accordingly, in this case, the luminance signal processed by the high pass filter 60 of the low cutoff frequency is selected and is used to form a final video signal. The processing of the luminance signal by the high pass filter 60 of the low cutoff frequency ensures that a wide band of the luminance signal sufficiently acts for the high picture quality.

### SECOND EMBODIMENT

Fig. 9 shows a second embodiment of this invention which is similar to the embodiment of Figs. 1-8 except for the following design changes.

As shown in Fig. 9, a recording section of the second embodiment includes a comb filter 110 receiving a composite video signal via an input terminal 31. The comb filter 110 separates the composite video signal into a luminance signal and a carrier chrominance signal. The quantity of luminance signal components in the carrier chrominance signal is generally smaller than a certain quantity. The luminance signal is outputted from the comb filter 110 to a first input terminal "a" of a switch 111. The carrier chrominance signal is outputted from the comb filter 110 to a first input terminal "a" of a switch 112.

A second input terminal "b" of the switch 111 receives a luminance signal transferred via an input terminal 49. A second input terminal "b" of the switch 112 receives a carrier chrominance signal transferred via an input terminal 50. An output terminal of the switch 111 is connected to a low pass filter 34. An output terminal of the switch 112 is connected to a band pass filter 40. The switches 111 and 112 are controlled via a gate signal fed from a switch interface 51.

The pilot signal adding circuit is removed from the second embodiment.

When a switch S is in a first position, the switches 111 and 112 pass the luminance signal and the carrier chrominance signal from the comb filter 110 to the low pass filter 34 and the band pass filter 40 respectively. When the switch S is in a second position, the switches 111 and 112 pass the luminance signal and the carrier chrominance signal from the input terminals 49 and 50 to the low pass filter 34 and the band pass filter 40 respectively. In both cases, no pilot signal is added to the carrier chrominance signal.

### THIRD EMBODIMENT

Fig. 10 shows a third embodiment of this invention which is similar to the embodiment of Figs. 1-8 except for the following design changes.

As shown in Fig. 10, a recording section of the second embodiment includes a comb filter 110 receiving a composite video signal via an input terminal 31. The comb filter 110 separates the composite video signal into a luminance signal and a carrier chrominance signal. The quantity of luminance signal components in the carrier chrominance signal is generally smaller than a certain quantity. The luminance signal is outputted from the comb filter 110 to a first input terminal "a" of a switch 111. The carrier chrominance signal is outputted from the comb filter 110 to a first input terminal "a" of a switch 112.

A second input terminal "b" of the switch 111 receives a luminance signal transferred via an input terminal 49. A second input terminal "b" of the switch 112 receives a carrier chrominance signal transferred via an input terminal 50. An output terminal of the switch 111 is connected to a low pass filter 34. An output terminal of the switch 112 is connected to a band pass filter 40. The switches 111 and 112 are controlled via a gate signal fed from a switch interface 51.

The switch 52 (see Fig. 1) is omitted from the third embodiment. A pilot signal generator 54 is directly connected to a mixer 41.

When a switch S is in a first position, the switches 111 and 112 pass the luminance signal and the carrier chrominance signal from the comb filter 110 to the low pass filter 34 and the band pass filter 40 respectively. When the switch S is in a second position, the switches 111 and 112 pass the luminance signal and the carrier chrominance signal from the input terminals 49 and 50 to the low pass filter 34 and the band pass filter 40 respectively. In both cases, a pilot signal is added to the carrier chrominance signal.

### FOURTH EMBODIMENT

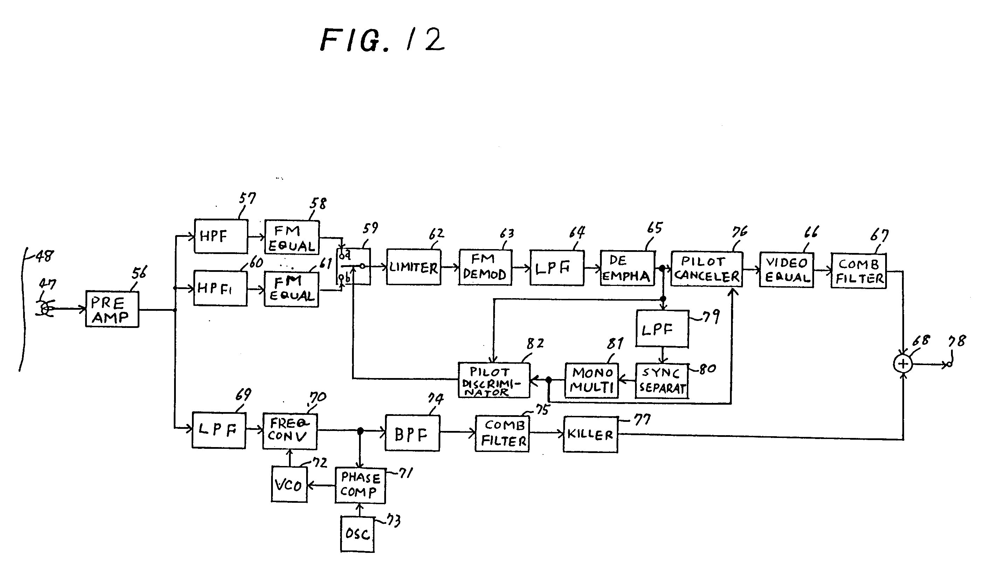

Figs. 11 and 12 show a fourth embodiment of this invention which is similar to the embodiment of Figs. 1-8 except for the following design changes.

As shown in Fig. 11, in a recording section of the fourth embodiment, a mixer 41 is interposed between a low pass filter 34 and a preemphasis circuit 35. A sync separator 53 is connected to an output terminal of the low pass filter 34. When a composite video signal received via an input terminal 31 is recorded, a pilot signal is added to a luminance signal during a horizontal or vertical blanking period.

As shown in Fig. 12, in a reproducing section of the fourth embodiment, a pilot signal discriminator 82 is connected to an output terminal of a deemphasis circuit 65. In addition, a pilot signal canceler 76 is interposed between the deemphasis circuit 65 and a video equalizer 66. Accordingly, a pilot signal is detected from a reproduced luminance signal outputted from the deemphasis circuit 65.

### FIFTH EMBODIMENT

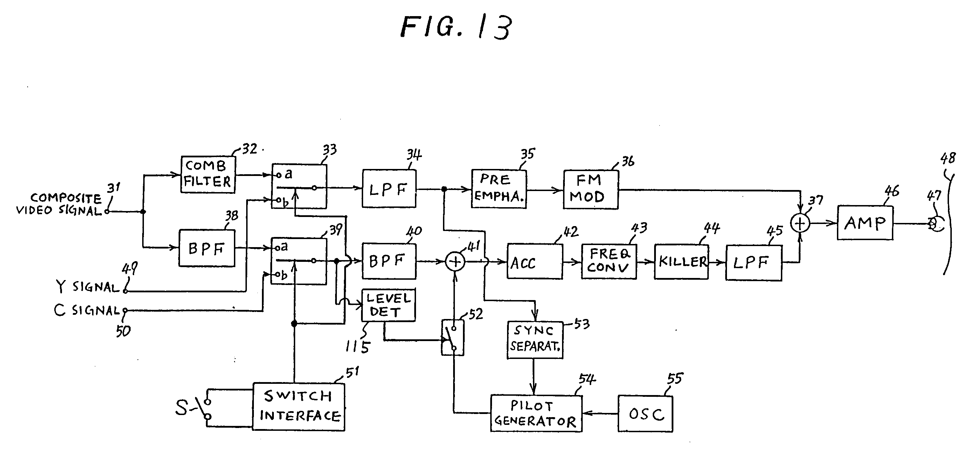

Fig. 13 shows a fifth embodiment of this invention which is similar to the embodiment of Figs. 1-8 except for the following design changes.

As shown in Fig. 13, a recording section of the fifth embodiment includes a level detector 115 connected to an output terminal of a switch 39. The level detector 115 compares a level of a high frequency luminance signal component contained in a carrier chrominance signal with a reference level. When the level of the high frequency luminance signal component in the carrier chrominance signal is equal to or greater than the reference level, the level detector 115 outputs a high-level signal. When the level of the high frequency luminance signal component in the carrier chrominance signal is smaller than the reference level, the level detector 115 outputs a low-level signal.

A switch 52 is disconnected from the switch interface 51. The switch 52 is controlled via an output signal from the level detector 115. When the level of the luminance signal component in the carrier chrominance signal is equal to or greater than the reference level, the output signal from the level detector 115 closes the switch 52 so that a pilot signal is added to the carrier chrominance signal. When the level of the luminance signal component in the carrier chrominance signal is smaller than the reference level, the output signal from the level detector 115 opens the switch 52 so that no pilot signal is added to the carrier chrominance signal.

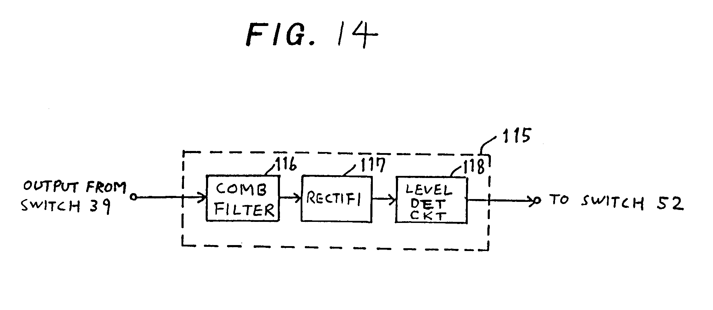

As shown in Fig. 14, the level detector 115 includes a comb filter 116, a rectifier 117, and a level detecting circuit 118. The comb filter 116 separates a high frequency luminance signal component from the carrier chrominance signal transmitted via the switch 39 (see Fig. 13). The device 117 rectifies and smooths the separated high frequency luminance signal component. The circuit 118 detects the level of an output signal from the rectifier 117, generating a control signal fed to the switch 52 (see Fig. 13).

The level detecting circuit 118 may be a combination of a smoothing circuit and a level comparator. The smoothing circuit processes the output signal from the rectifier. The comparator determines whether or not the level of an output signal from the smoothing circuit is lower than a reference level, and generates a signal representative thereof which is outputted to the switch 52 (see Fig. 13).

### SIXTH EMBODIMENT

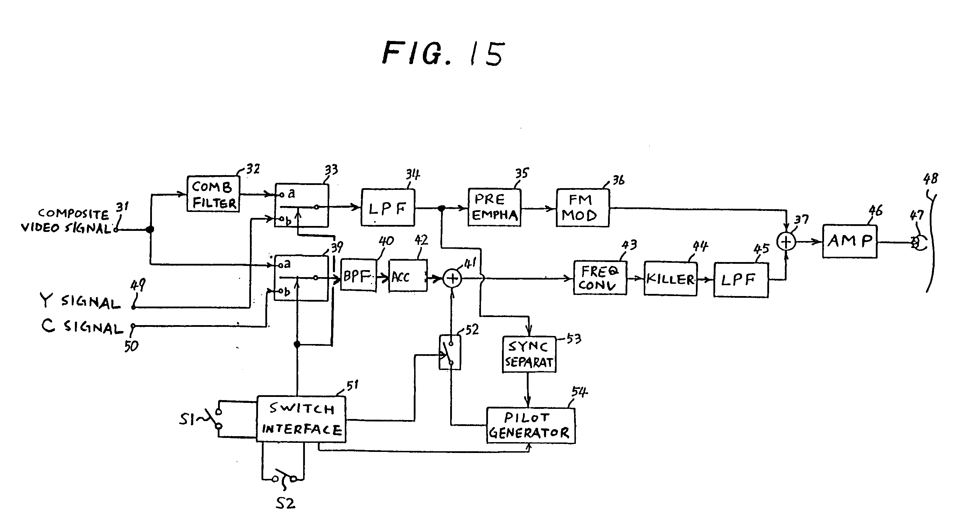

Fig. 15 shows a sixth embodiment of this invention which is similar to the embodiment of Figs. 1-8 except for the following design changes.

As shown in Fig. 15, in a recording section of the sixth embodiment, a first input terminal "a" of a switch 39 is directly connected to an input terminal 31 via which a composite video signal is transferred. An output terminal of the switch 39 is connected to a mixer 41 via a series combination of a band pass filter 38 and an ACC circuit 42. An output terminal of the mixer 41 is directly connected to a frequency converter 43.

Two manual switches S1 and S2 are connected to a switch interface 51, which is directly coupled to a pilot signal generator 54. A control signal outputted from the switch interface 51 to the switches 33 and 39 depends on the position of the manual switch S1. When the manual switch S1 is in a first position, a composite video signal transferred via the input terminal 31 is selected by the switches 33 and 39 and is then recorded. When the manual switch S1 is in a second position, component video signals transferred via input terminals 49 and 50 are selected by the switches 33 and 39 and are then recorded.

A control signal outputted from the switch interface 51 to a switch 52 depends on the position of the manual switch S2. When the manual switch S2 is in a first position, the output signal from the switch interface 51 closes the switch 52. In this case, a pilot signal is allowed to travel from a pilot signal generator 54 to the mixer 41 so that the pilot signal is added to the carrier chrominance signal. When the manual switch S2 is in a second position, the output signal from the switch interface 51 opens the switch 52. In this case, the transfer of the pilot signal from the pilot signal generator 54 to the mixer 41 is inhibited so that no pilot signal is added to the carrier chrominance signal.

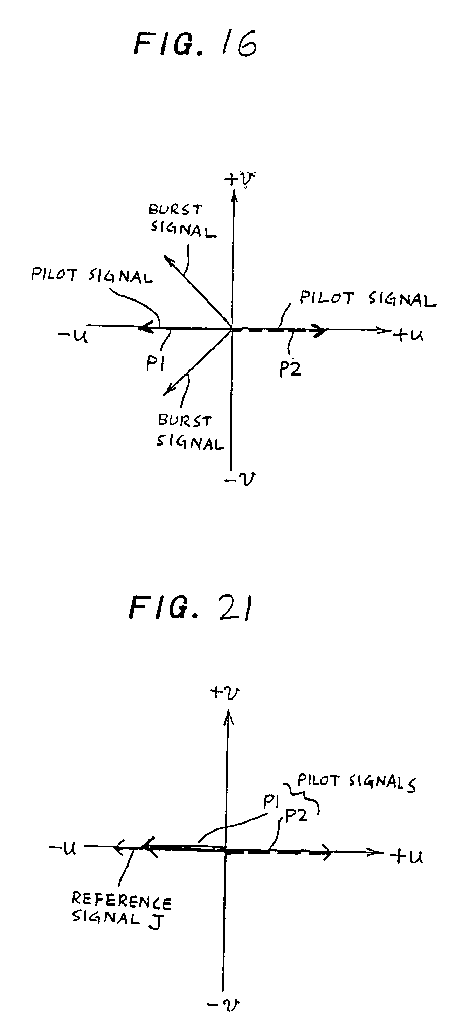

In cases where a composite video signal transferred via the input terminal 31 is recorded and where a band of a luminance signal is equal to or greater than a color subcarrier frequency, the manual switch S1 is set to a position at which the composite video signal is selected while the manual switch S2 is set to a position at which the pilot signal is added to the carrier chrominance signal. In these cases, the pilot signal is synchronized with the burst signal. Furthermore, as shown by the arrow P1 in Fig. 16, the phase of the pilot signal is chosen to correspond to -u axis (180^{o}). It should be noted that the phase of the burst signal equals 180^{o}±45^{o}.

In cases where component video signals transferred via the input terminals 49 and 50 are recorded and where a luminance signal has a band extending toward a high frequency side beyond a color subcarrier frequency, the manual switch S1 is set to a position at which the component video signals are selected while the manual switch S2 is set to a position at which the pilot signal is added to the carrier chrominance signal. In these cases, the pilot signal is synchronized with the burst signal. Furthermore, as shown by the arrow P2 in Fig. 16, the phase of the pilot signal is chosen to correspond to +u axis (0^{o}).

In cases where a band of a luminance signal is smaller than a color subcarrier frequency, the manual switch S2 is set to a position at which no pilot signal is added to the carrier chrominance signal.

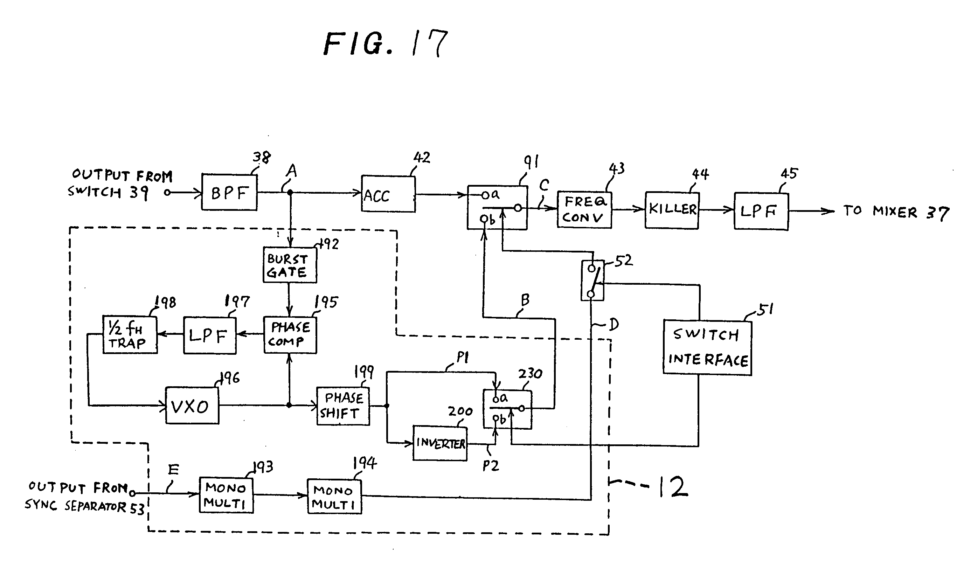

The recording section of the sixth embodiment will be described further. As shown in Fig. 17, the recording section includes a circuit 12 corresponding to the pilot signal generator 54 of Fig. 15.

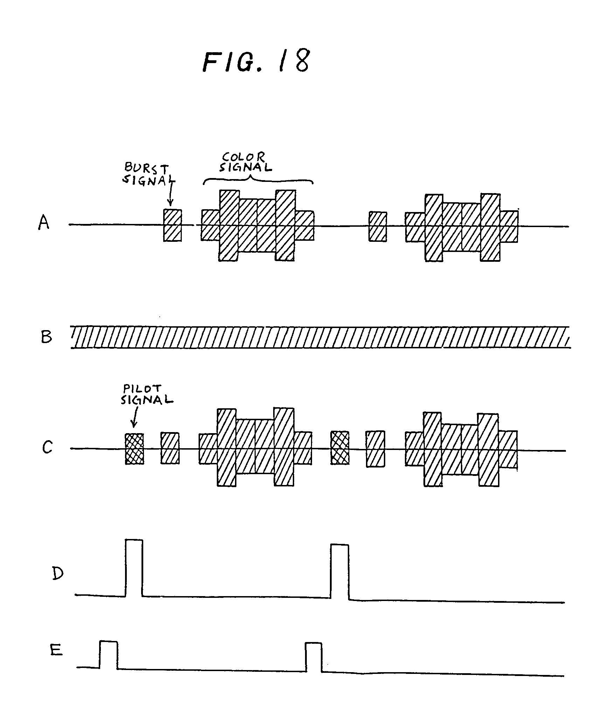

The chrominance signal (see Fig. 18(A)) outputted from the band pass filter 38 is fed to a first input terminal "a" of a switch 191 via the ACC circuit 42. The chrominance signal (see Fig. 18(A) outputted from the band pass filter 40 is also applied to a burst gate 192 within the circuit 12. The gate 192 derives a burst signal from the chrominance signal, the burst signal being applied to a first input terminal of a phase comparator 195. An output signal from a variable crystal oscillator 196 is applied to a second input terminal of the phase comparator 195. The device 195 compares the phase of the burst signal and the phase of the output signal from the variable crystal oscillator 196. An output signal from the phase comparator 195 is sequentially processed by a low pass filter 197 and an fH/2 trap 198. An output signal from the trap 198 is applied to the variable crystal oscillator 196 as a control signal. The phase comparator 195, the low pass filter 197, the trap 198, and the variable crystal oscillator 196 form an APC (automatic phase control) circuit loop which generates a continuous wave signal locked in phase to the burst signal.

The continuous wave signal is outputted from the variable crystal oscillator 196 to a phase shifter 199, which derives a second continuous wave signal P1 having a phase of 0^{o} with respect to the burst signal. The continuous wave signal P1 is applied to a first input terminal "a" of a switch 230 within the circuit 12. An inverter 200 derives a third continuous wave signal P2 from the continuous wave signal P1. The phase of the continuous wave signal P2 differs from the phase of the continuous wave signal P1 by 180^{o}. The continuous wave signal P2 is applied to a second input terminal "b" of the switch 230.

The continuous wave signals P1 and P2 constitute pilot signals whose phases correspond to -u axis (180^{o}) and +u axis (0^{o}) respectively as shown in Fig. 16. The switch 230 selects one of the pilot signals P1 and P2 and passes the selected pilot signal (see Fig. 18(B)) to a second input terminal "b" of the switch 191. The switch 230 is changed via an output signal from the switch interface 51 which depends on the position of the manual switch S2 (see Fig. 15).

In cases where the composite video signal is recorded, the manual switch S2 (see Fig. 15) is set to a position at which the pilot signal P1 is selected and added to the chrominance signal. In cases where the component video signals are recorded, the manual switch S2 (see Fig. 15) is set to a position at which the pilot signal P2 is selected and added to the chrominance signal.

When a gate signal (see Fig. 18(D)) described hereinafter is applied to the switch 191, the second input terminal "b" is connected to the output terminal of the switch 191 so that the pilot signal (see Fig. 18(B)) is transferred to the frequency converter 43 via the switch 191. The level of the pilot signal is set approximately equal to the level of the burst signal in a standard input video signal. When a gate signal (see Fig. 18(D)) is removed from the switch 191, the output terminal of the switch 191 separates from its second input terminal "b" but contacts with its first input terminal "a" so that the chrominance signal travels from the ACC circuit 42 to the frequency converter 43 via the switch 191 and the addition of the pilot signal is inhibited.

An output signal (see Fig. 18(C)) from the switch 191 is sequentially processed by the frequency converter 43 and a killer circuit 44. An output signal from the killer circuit 44 is applied to a low pass filter 45. An output signal from the low pass filter 45 is fed to a mixer 37 (see Fig. 15).

A horizontal sync signal (see Fig. 18(E)) outputted from a sync separator 53 (see Fig. 15) is converted by a combination of monostable multivibrators 193 and 194 into a gate signal (see Fig. 18(D)). As shown in Fig. 18(D), the gate signal includes a timing pulse. An output terminal of the monostable multivibrator 194 is connected to the switch 191 via the switch 52. When the switch 52 is closed, the gate signal travels to the switch 191 so that the addition of the pilot signal to the chrominance signal is enabled. When the switch 52 is opened, the gate signal is cut off so that the addition of the pilot signal to the chrominance signal is inhibited. As described previously, the state of the switch 52 depends on the position of the manual switch S2 (see Fig. 15).

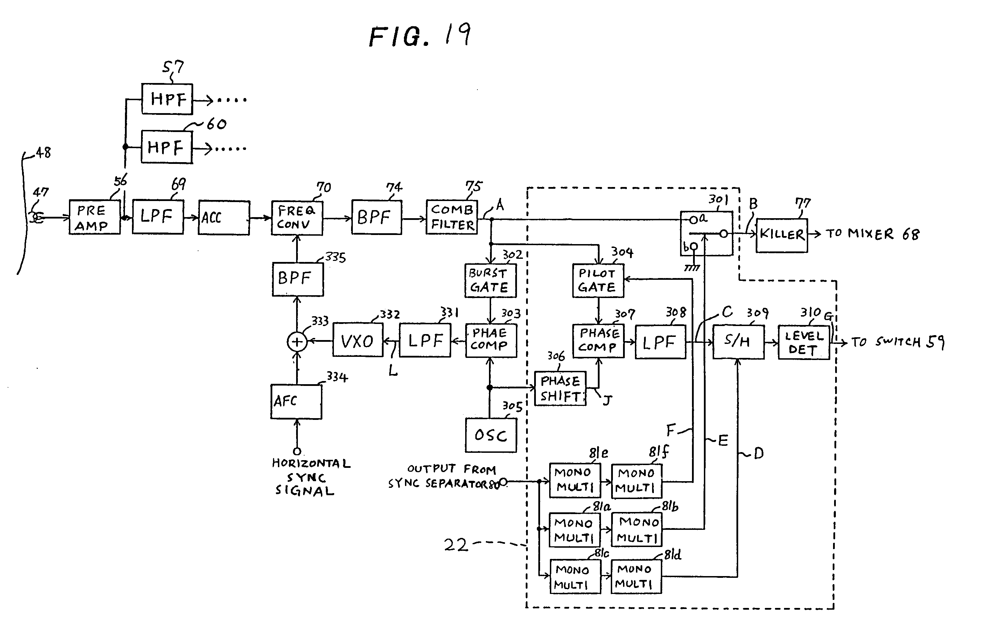

As shown in Fig. 19, a reproducing section of the sixth embodiment includes a circuit 22 corresponding to the pilot signal canceler 76 (see Fig. 2) and the pilot signal discriminator 82 (see Fig. 2).

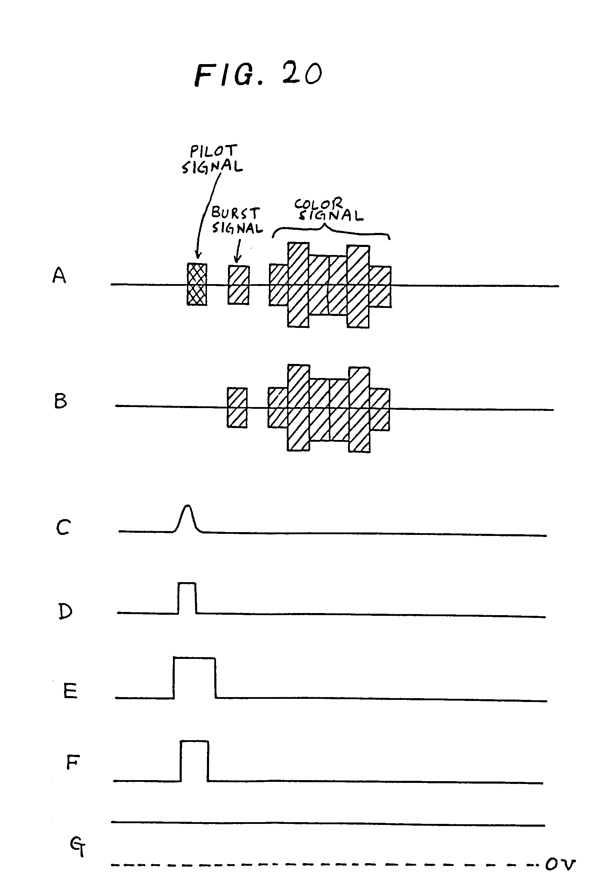

In the reproducing section of the sixth embodiment, an output signal from a low pass filter 69 is transferred to a frequency converter 70 via an ACC circuit (no reference character). A reproduced chrominance signal (see Fig. 20(A)) outputted from a comb filter 75 is applied to a first input terminal "a" of a switch 301 within the circuit 22. A second input terminal "b" of the switch 301 is grounded.

When a gate signal (see Fig. 20(E)) is fed to the switch 301, an output terminal of the switch 301 is disconnected from its first input terminal "a" but is connected to its second input terminal "b" so that an added pilot signal is cancelled from the chrominance signal. When the gate signal is removed from the switch 301, the output terminal of the switch 301 is connected to its first input terminal "a" so that the chrominance signal passes through the switch 301.

An output signal (see Fig. 20(B)) from the switch 301 is fed to a mixer 68 (see Fig. 2) via a killer circuit 77.

A horizontal sync signal outputted from a sync separator 80 (see Fig. 2) is converted by a combination of monostable multivibrators 81a and 81b into a gate signal (see Fig. 20(E)) which is applied to the switch 301. The horizontal sync signal is converted by a combination of monostable multivibrators 81c and 81d into sampling pulses (see Fig. 20(D)) which are applied to a sample-and-hold circuit 309. The horizontal sync signal is converted by a combination of monostable multivibrators 81e and 81f into pilot signal gate pulses (see Fig. 20(F)) which are applied to a pilot gate 304.

The reproduced chrominance signal (see Fig. 20(A)) outputted from the comb filter 75 undergoes an APC (automatic phase control) process. Specifically, a burst gate 302 extracts a burst signal from the chrominance signal. A phase comparator 303 compares the phase of the burst signal with the phase of a reference signal outputted from a crystal oscillator 305. An output signal from the phase comparator 303 is fed via a low pass filter 331 to a variable crystal oscillator 332 as a control signal. An output signal from the variable crystal oscillator 332 is applied to a first input terminal of a mixer 333. After processed by an AFC circuit 334, a horizontal sync signal is applied to a second input terminal of the mixer 333. An output signal from the mixer 333 is fed via a band pass filter 335 to the frequency converter 70.

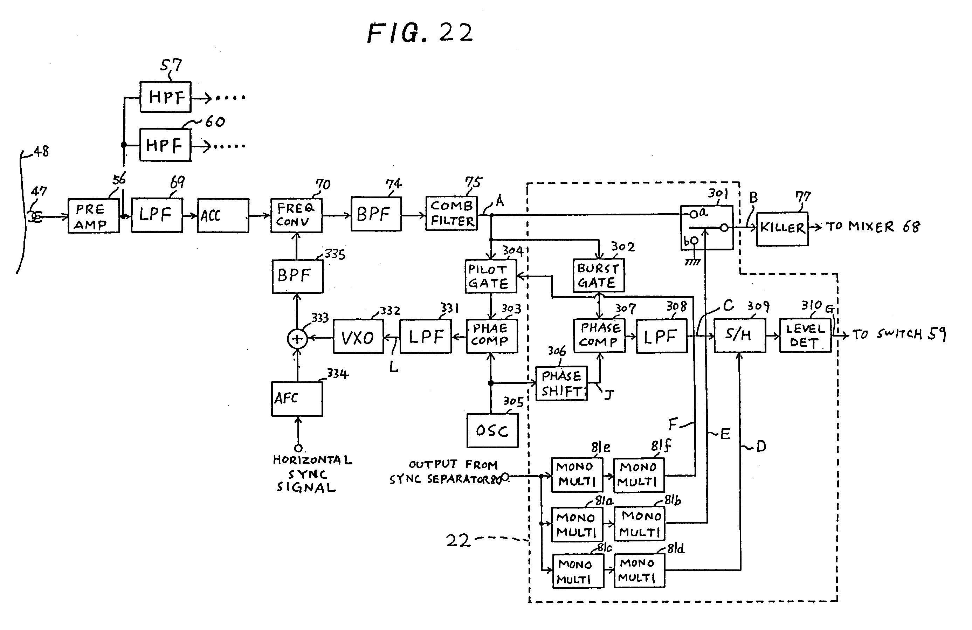

The pilot gate 304 extracts a pilot signal P1 or P2 (see Fig. 21) from the reproduced chrominance signal (see Fig. 20(A)) outputted from the comb filter 75. A phase comparator 307 compares the phase of the pilot signal P1 or P2 with the phase of a reference signal J (see Fig. 21) outputted from a phase shifter 306. The phase shifter 306 generates the reference signal J on the basis of the output signal from the crystal oscillator 305. It should be noted that the frequency of the output signal from the crystal oscillator 305 equals a color subcarrier frequency, that is, 4.433 MHz, in a PAL system.

A low pass filter 308 damps a 4.43-MHz frequency component of an output signal from the phase comparator 307. An output signal (see Fig. 20(C)) from the low pass filter 308 is sampled and held by the device 309 at timings determined by the sampling pulses fed from the monostable multivibrator 81d. The timings of the sampling pulses are chosen so that the maximal or minimal values of the output signal from the low pass filter 308 can be sampled.

A level detector 310 generates a control signal in accordance with an output signal from the sample-and-hold circuit 309. The control signal outputted from the level detector 310 assumes a high potential when the level of the output signal from the sample-and-hold circuit 309 is equal to or greater than a reference level. The control signal assumes a low potential when the level of the output signal from the circuit 309 is smaller than the reference level. The control signal is transferred from the level detector 310 to a switch 59 (see Fig. 2).

The level of the control signal outputted from the level detector 310 to the switch 59 (see Fig. 2) changes in accordance with the phase of the discriminated pilot signal. When the pilot signal P1 is detected, the control signal allows the switch 59 (see Fig. 2) to select a first FM luminance signal which was processed by a high pass filter 57 of a high cutoff frequency. When the pilot signal P2 is detected, the control signal allows the switch 59 (see Fig. 2) to select a second FM luminance signal which was processed by a high pass filter 60 of a low cutoff frequency.

During the reproduction of a signal caused by recording of an input composite video signal in a wide band mode, since a pilot signal P1 is added to a chrominance signal, a first FM luminance signal derived through the high pass filter 57 of a high cutoff frequency is selected and is used to form a final reproduced video signal. During the reproduction of a signal caused by recording of input component video signals in a wide band mode, since a pilot signal P2 is added to a chrominance signal, a second FM luminance signal derived through the high pass filter 60 of a low cutoff frequency is selected and is used to form a final reproduced video signal.

### SEVENTH EMBODIMENT

Fig. 22 shows a seventh embodiment of this invention which is similar to the embodiment of Figs. 15-21 except for the following design changes.

As shown in Fig. 22, in a reproducing section of the seventh embodiment, a pilot gate 304 is connected between a comb filter 75 and a phase comparator 303, and a burst gate 302 is connected between the comb filter 75 and a phase comparator 307.

Since a pilot signal does not change although a burst signal alternates at one-line intervals in a PAL system, an output signal from the phase comparator 303 is stabilized and thus a high S/N of a reproduced chrominance signal is ensured.

### EIGHTH EMBODIMENT

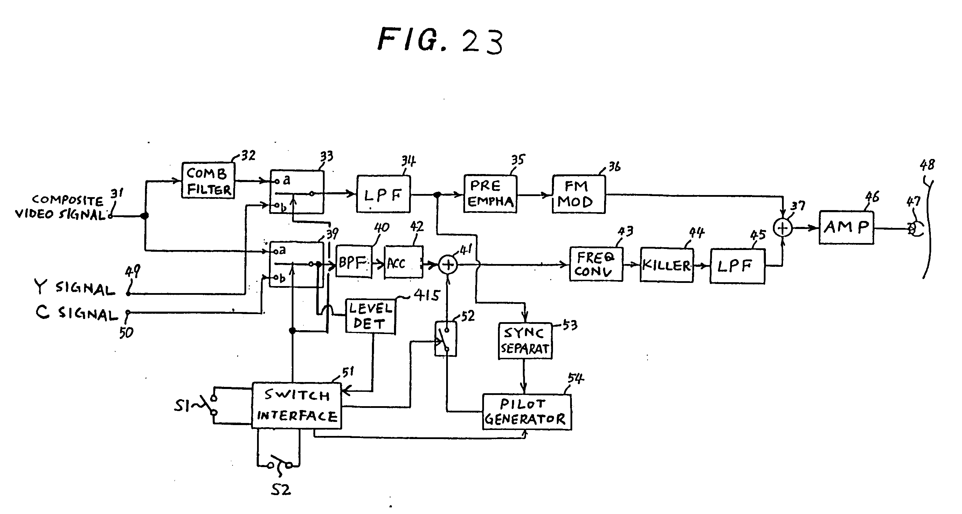

Fig. 23 shows an eighth embodiment of this invention which is similar to the embodiment of Figs. 15-21 except for the following design changes.

As shown in Fig. 23, a recording section of the eighth embodiment includes a level detector 415 receiving a carrier chrominance signal from a switch 39 and outputting a signal which depends on the carrier chrominance signal. The output signal from the level detector 415 assumes a high potential when the level of a high-frequency luminance signal component in the carrier chrominance signal is equal to or greater than a reference level. The output signal from the level detector 415 assumes a low potential when the level of a high-frequency luminance signal component in the carrier chrominance signal is smaller than the reference level.

A switch interface 51 generates a control signal depending on the output signal from the level detector 415. The control signal is fed from the switch interface 51 to a pilot signal generator 54. One of pilot signals P1 and P2 is selected and added to the carrier chrominance signal in accordance with the control signal fed from the switch interface 51. When the level of a high-frequency luminance component in the carrier chrominance signal is equal to or greater than the reference level, the pilot signal P1 having a phase of 180^{o} is selected and added to the carrier chrominance signal. When the level of a high-frequency luminance component in the carrier chrominance signal is smaller than the reference level, the pilot signal P2 having a phase of 0^{o} is selected and added to the carrier chrominance signal.

The internal structure of the level detector 415 is similar to the internal structure of the level detector 115 of Fig. 14.

## Claims

1. A magnetic recording apparatus wherein a frequency-modulated luminance signal and a frequency-lowered colour signal are combined into a frequency-division multiplexed signal through a frequency-division multiplexing process, the frequency-modulated luminance signal being derived from a luminance signal through a frequency modulation process, the frequency-lowered colour signal being derived from a carrier chrominance signal through a frequency-down conversion process, the frequency-division multiplexed signal being recorded onto a magnetic recording medium, and wherein a part of the luminance signal has a frequency equal to or greater than the colour subcarrier frequency;
characterised by means (41, 51-55) for selectively adding a pilot signal to the signal to be recorded according to whether or not a quantity of a high-frequency luminance signal component contained in the colour signal in the signal to be recorded is smaller than a reference quantity.

2. A magnetic recording apparatus according to claim 1 further adapted to reproduce the frequency-division multiplexed signal being from said magnetic recording medium, and further comprising:
a high pass filter (57, 60) and means (82), operable during reproduction, to vary the cutoff frequency of the high pass filter in accordance with whether the pilot signal is present in or absent from a signal reproduced from the magnetic recording medium, the high pass filter separating the reproduced luminance signal from a frequency-division multiplexed signal reproduced from the magnetic recording medium.

3. Apparatus according to claim 1 or 2 further adapted to be operable in a wide band mode and a standard mode, the band width of the luminance signal being smaller than the colour subcarrier frequency in said standard mode, and a part of the luminance signal having a frequency equal to or greater than the colour subcarrier frequency in a said wide band mode; and wherein said means for adding the pilot signal are operable only in the wide band mode.

4. A magnetic recording apparatus wherein a frequency-modulated luminance signal and a frequency-lowered colour signal are combined into a frequency-division multiplexed signal through a frequency-division multiplexing process, the frequency-modulated luminance signal being derived from a luminance signal through a frequency modulation process, the frequency-lowered colour signal being derived from a carrier chrominance signal through a frequency-down conversion process, the frequency-division multiplexed signal being recorded in a magnetic recording medium, and wherein a part of the luminance signal has a frequency equal to or greater than the colour subcarrier frequency;
characterised by means for adding a pilot signal to the signal to be recorded, the phase of the pilot signal depending on whether a high-frequency luminance signal component is present in or absent from the colour signal in the signal to be recorded.

5. Apparatus according to claim 4 further adapted to reproduce the frequency-division multiplexed signal from the magnetic recording medium, and further comprising:
a high pass filter and means, operable during reproduction to vary the cutoff frequency of the high pass filter according to the phase of the pilot signal detected from the reproduced signal, the high pass filter separating a reproduced luminance signal from a frequency-division multiplexed signal reproduced from the magnetic recording medium.

6. Apparatus according to claim 4 or 5 further adapted to operate in a wide band mode and a standard mode, the frequency bandwidth of the luminance signal being smaller than a colour subcarrier frequency in the standard mode, and a part of the luminance signal having a frequency equal to or greater than the colour subcarrier frequency in the wide band mode; and wherein said means for adding a pilot signal are operable only in the wide band mode.

7. Apparatus according to any preceding claim wherein said means for adding a pilot signal are adapted to the pilot during a period corresponding to a horizontal or vertical blanking period of the colour signal in the signal to be recorded.

8. Apparatus according to any one of claims 1 to 6 wherein said means for adding a pilot signal are adapted to add the pilot signal during a period corresponding to a horizontal or vertical blanking period or a colour burst position of the luminance signal in the signal to be recorded.

9. A method of recording a frequency division multiplex signal onto a magnetic recording medium, the frequency division multiplexed signal comprising a frequency modulated luminance signal and a frequency lowered colour signal combined through a frequency division multiplexing process, the frequency modulated luminance signal being derived from a luminance signal through a frequency modulation process, the frequency lowered colour signal being derived from a carrier chrominance signal through a frequency down conversion process and a part of the luminance signal having a frequency equal to or greater than the colour sub-carrier frequency; the method comprising the step of
selectively adding a pilot signal to the signal to be recorded according to whether or not a quantity of a high frequency luminance signal component contained in the colour signal in the signal to be recorded is smaller than a reference quantity.

10. A method according to claim 9, further comprising the additional steps of reproducing the frequency division multiplex signal from the magnetic recording medium;
varying the cut-off frequency of a high pass filter in accordance with whether or not the pilot signal is present in the signal reproduced from the magnetic recording medium; and
separating the reproduced luminance signal from the frequency division multiplex signal reproduced from the magnetic recording medium using the high pass filter.

11. A method of recording a frequency division multiplex signal onto a magnetic recording medium, the frequency division multiplexed signal comprising a frequency modulated luminance signal and a frequency lowered colour signal combined through a frequency division multiplexing process, the frequency modulated luminance signal being derived from a luminance signal through a frequency modulation process, the frequency lowered colour signal being derived from a carrier chrominance signal through a frequency down conversion process and a part of the luminance signal having a frequency equal to or greater than the colour sub-carrier frequency of the frequency lowered colour signal; the method comprising the step of
adding a pilot signal to the signal to be recorded, the phase of the pilot signal depending on whether a high frequency luminance signal component is present in the colour signal in the signal to be recorded.

12. A method according to claim 11 comprising the further steps of reproducing the frequency division multiplexed signal from the magnetic recording medium;
varying the cut-off frequency of a high pass filter according to the phase of the pilot signal detected from the reproduced signal; and
separating the reproduced luminance signal from the frequency division multiplex signal reproduced from the magnetic recording medium using the high pass filter.

## Patentansprüche

1. Magnetaufzeichnungs-Vorrichtung, bei der ein frequenzmoduliertes Luminanzsignal und ein frequenzabgesenktes Farbsignal durch einen Frequenzteilungs-Multiplexiervorgang zu einem frequenzteilungs-multiplexierten Signal kombiniert sind, wobei das frequenzmodulierte Luminanzsignal von einem Luminanzsignal durch einen Frequenzmodulierungs-Vorgang abgeleitet ist, das frequenzabgesenkte Farbsignal von einem Trägerchrominanzsignal durch einen Frequenz-Abwärtswandlungs-Vorgang abgeleitet ist, das frequenzteilungs-multiplexierte Signal auf ein magnetisches Aufzeichnungsmedium aufgezeichnet ist und worin ein Teil des Luminanzsignals eine Frequenz gleich der oder größer als die Farbhilfsträgerfrequenz besitzt;
gekennzeichnet durch Mittel (41, 51-55) zum selektiven Hinzufügen eines Pilotsignals zu dem aufzuzeichnenden Signal, je nachdem, ob eine Größe einer in dem Farbsignal in dem aufzuzeichnenden Signal enthaltenen Hochfrequenz-Luminanzsignalkomponente kleiner als eine Referenzgröße ist oder nicht.

2. Magnetaufzeichnungs-Vorrichtung nach Anspruch 1, weiter ausgelegt zum Wiedergeben des frequenzteilungs-multiplexierten Signals von dem magnetischen Aufzeichnungsmedium, und die weiter umfaßt:
ein Hochpaßfilter (57, 60) und während der Wiedergabe betreibbares Mittel (82) zum Verändern der Grenzfrequenz des Hochpaßfilters in Entsprechung damit, ob das Pilotsignal in einem von dem magnetischen Aufzeichnungsmedium wiedergegebenen Signal vorhanden oder nicht vorhanden ist, wobei das Hochpaßfilter das wiedergegebene Luminanzsignal von einem von dem magnetischen Aufzeichnungsmedium wiedergegebenen frequenzteilungs-multiplexierten Signal abtrennt.

3. Vorrichtung nach Anspruch 1 oder 2, weiter ausgelegt, in einem Breitbandbetrieb und einem Standardbetrieb betreibbar zu sein, wobei die Bandbreite des Luminanzsignals kleiner als die Farbhilfsträgerfrequenz in dem Standardbetrieb ist und ein Teil des Luminanzsignals eine Frequenz gleich der oder größer als die Farbhilfsträgerfrequenz in dem Breitbandbetrieb besitzt und wobei die Mittel zum Hinzufügen des Pilotsignals nur in dem Breitbandbetrieb betreibbar sind.

4. Magnetaufzeichnungs-Vorrichtung, bei der ein frequenzmoduliertes Luminanzsignal und ein frequenzabgesenktes Farbsignal durch einen Frequenzteilungs-Multiplexiervorgang zu einem frequenzteilungs-multiplexierten Signal kombiniert sind, wobei das frequenzmodulierte Luminanzsignal von einem Luminanzsignal durch einen Frequenzmodulierungs-Vorgang abgeleitet ist, das frequenzabgesenkte Farbsignal von einem Trägerchrominanzsignal durch einen Frequenz-Abwärtswandlungs-Vorgang abgeleitet ist, das frequenzteilungs-multiplexierte Signal auf ein magnetisches Aufzeichnungsmedium aufgezeichnet ist und worin ein Teil des Luminanzsignals eine Frequenz gleich der oder größer als die Farbhilfsträgerfrequenz besitzt;
gekennzeichnet durch Mittel zum Hinzufügen eines Pilotsignals zu dem aufzuzeichnenden Signal, wobei die Phase des Pilotsignals davon abhängt, ob eine Hochfrequenz-Luminanzsignalkomponente in dem Farbsignal in dem aufzuzeichnenden Signal vorhanden oder von ihm abwesend ist.

5. Vorrichtung nach Anspruch 4, weiter ausgelegt zum Wiedergeben des frequenzteilungs-multiplexierten Signals von dem magnetischen Aufzeichnungsmedium, und die weiter umfaßt:
ein Hochpaßfilter und während der Wiedergabe betreibbares Mittel zum Verändern der Grenzfrequenz des Hochpaßfilters entsprechend der Phase des Pilotsignals, wie es von dem wiedergegebenen Signal erfaßt wird, wobei das Hochpaßfilter ein wiedergegebenes Luminanzsignal von einem von dem magnetischen Aufzeichnungsmedium wiedergegebenen frequenzteilungs-multiplexierten Signal abtrennt.

6. Vorrichtung nach Anspruch 4 oder 5, weiter dazu ausgelegt, in einem Breitbandbetrieb und einem Standardbetrieb zu arbeiten, wobei die Frequenzbandbreite des Luminanzsignals kleiner als eine Farbhilfsträgerfrequenz in dem Standardbetrieb ist und ein Teil des Luminanzsignals eine Frequenz gleich der oder größer als die Farbhilfsträgerfrequenz in dem Breitbandbetrieb besitzt; und wobei die Mittel zum Hinzufügen des Pilotsignals nur in dem Breitbandbetrieb betreibbar sind.

7. Vorrichtung nach einem der vorangehenden Ansprüche, bei der die Mittel zum Hinzufügen eines Pilotsignals ausgelegt sind, das Pilotsignal während eines Zeitraums hinzuzufügen, der einer Horizontal- oder Vertikal-Austastzeit des Farbsignals in dem aufzuzeichnenden Signal entspricht.

8. Vorrichtung nach einem der Ansprüche 1 bis 6, bei der die Mittel zum Hinzufügen eines Pilotsignals ausgelegt sind, das Pilotsignal während eines Zeitraums hinzuzufügen, der einer Horizontal- oder Vertikal-Austastzeit oder einer Farbburst-Position des Luminanzsignals in dem aufzuzeichnenden Signal entspricht.

9. Verfahren zum Aufzeichnen eines frequenzteilungs-multiplexierten Signals auf ein magnetisches Aufzeichnungsmedium, wobei das frequenzteilungs-multiplexierte Signal ein frequenzmoduliertes Luminanzsignal und ein frequenzabgesenktes Farbsignal umfaßt, die durch einen Frequenzteilungsmultiplexier-Vorgang kombiniert sind, das frequenzmodulierte Luminanzsignal von einem Luminanzsignal durch einen Frequenzmodulierungs-Vorgang abgeleitet ist, das frequenzabgesenkte Farbsignal von einem Trägerchrominanzsignal durch einen Frequenzabwärtswandlungs-Vorgang abgeleitet ist und ein Teil des Luminanzsignals eine Frequenz gleich der oder größer als die Farbhilfsträgerfrequenz besitzt; und das Verfahren den Schritt umfaßt,
daß wahlweise ein Pilotsignal zu dem aufzuzeichnenden Signal hinzugefügt wird, je nachdem, ob eine Größe einer in dem Farbsignal in dem aufzuzeichnenden Signal enthaltenen Hochfrequenz-Luminanzsignalkomponente kleiner als eine Referenzgröße ist oder nicht.

10. Verfahren nach Anspruch 9, das weiter umfaßt die zusätzlichen Schritte, daß das frequenzteilungs-multiplexierte Signal von dem magnetischen Aufzeichnungsmedium wiedergegeben wird;
die Grenzfrequenz eines Hochpaßfilters variiert wird, jenachdem, ob das Pilotsignal in dem von dem magnetischen Aufzeichnungsmedium wiedergegebenen Signal enthalten ist oder nicht; und
das wiedergegebene Luminanzsignal von dem von dem magnetischen Aufzeichnungsmedium wiedergegebenen frequenzteilungs-multiplexierten Signal unter Benutzung des Hochpaßfilters abgetrennt wird.

11. Verfahren zum Aufzeichnen eines frequenzteilungs-multiplexierten Signals auf ein magnetisches Aufzeichnungsmedium, wobei das frequenzteilungs-multiplexierte Signal ein frequenzmoduliertes Luminanzsignal und ein frequenzabgesenktes Farbsignal umfaßt, die durch einen Frequenzteilungsmultiplexier-Vorgang kombiniert sind, das frequenzmodulierte Luminanzsignal von einem Luminanzsignal durch einen Frequenzmodulierungs-Vorgang abgeleitet ist, das frequenzabgesenkte Farbsignal von einem Trägerchrominanzsignal durch einen Frequenzabwärtswandlungs-Vorgang abgeleitet ist und ein Teil des Luminanzsignals eine Frequenz gleich der oder größer als die Farbhilfsträgerfrequenz des frequenzabgesenkten Farbsignals besitzt; und das Verfahren den Schritt umfaßt,
daß ein Pilotsignal zu dem aufzuzeichnenden Signal hinzugefügt wird, wobei die Phase des Pilotsignals davon abhängt, ob eine Hochfrequenz-Luminanzsignalkomponente in dem Farbsignal in dem aufzuzeichnenden Signal vorhanden ist oder nicht.

12. Verfahren nach Anspruch 11, das die weiteren Schritte umfaßt, daß das frequenzteilungs-multiplexierte Signal von dem magnetischen Aufzeichnungsmedium wiedergegeben wird;
die Grenzfrequenz eines Hochpaßfilters variiert wird entsprechend der Phase des von dem wiedergegebenen Signal erfaßten Pilotsignals; und
das wiedergegebene Luminanzsignal von dem von dem magnetischen Aufzeichnungsmedium wiedergegebenen frequenzteilungs-multiplexierten Signal unter Benutzung des Hochpaßfilters abgetrennt wird.

## Revendications

1. Un appareil d'enregistrement magnétique dans lequel un signal de luminance modulé en fréquence et un signal de couleur abaissé en fréquence sont combinés en un signal multiplex à division de fréquences par un procédé de multiplexage à division de fréquences, le signal de luminance modulé en fréquence étant dérivé d'un signal de luminance par un processus de modulation de fréquence, le signal de couleur abaissé en fréquence étant dérivé d'un signal de porteuse de chrominance par un processus d'abaissement de fréquence, le signal multiplex à division de fréquences étant enregistré sur un support d'enregistrement magnétique, et dans lequel une partie du signal de luminance a une fréquence égale ou supérieure à la fréquence de la sous-porteuse de couleur.
**caractérisé** par des moyens (41, 51-55) pour ajouter de façon sélective un signal pilote au signal à enregistrer suivant si une quantité de composantes du signal de luminance haute fréquence contenues dans le signal de couleur dans le signal à enregistrer est inférieure à une quantité de référence, ou non.

2. Un appareil d'enregistrement magnétique suivant la revendication 1, adapté en outre à la reproduction du signal multiplex à division de fréquences à partir dudit support d'enregistrement magnétique, et comportant en outre :
un filtre passe-haut (57, 60) et un moyen (82), qui peut fonctionner pendant l'étape de reproduction, pour faire varier la fréquence de coupure du filtre passe-haut suivant si le signal pilote est présent ou absent du signal reproduit à partir du support d'enregistrement magnétique, le filtre passe-haut séparant le signal de luminance reproduit du signal multiplex à division de fréquences reproduit à partir du support d'enregistrement magnétique.

3. Un appareil suivant la revendication 1 ou 2, adapté en outre pour fonctionner en mode à large bande et en mode standard, la largeur de bande du signal de luminance étant plus petite que la fréquence de la sous-porteuse de couleur dans ledit mode standard, et une partie du signal de luminance ayant une fréquence égale ou supérieure à la fréquence de la sous-porteuse de couleur dans ledit mode à large bande ; et dans lequel ledit moyen pour ajouter le signal pilote ne peut fonctionner que dans le mode à large bande.

4. Un appareil d'enregistrement magnétique, dans lequel un signal de luminance modulé en fréquence et un signal de couleur abaissé en fréquence sont combinés en un signal multiplex à division de fréquences par un processus de multiplexage à division de fréquences, le signal de luminance modulé en fréquence étant dérivé d'un signal de luminance par un processus de modulation de fréquence, le signal de couleur abaissé en fréquence étant dérivé d'un signal de porteuse de chrominance par un processus d'abaissement de fréquence, le signal multiplexé à division de fréquences étant enregistré dans un support d'enregistrement magnétique, et dans lequel une partie du signal de luminance a une fréquence égale ou supérieure à la fréquence de la sous-porteuse de couleur,
**caractérisé** par un moyen pour ajouter un signal pilote au signal à enregistrer, la phase du signal pilote dépendant du fait qu'une composante du signal de luminance haute fréquence est présente ou absente du signal de couleur dans le signal à enregistrer.

5. Un appareil suivant la revendication 4, adapté en outre à la reproduction d'un signal multiplexé à division de fréquences à partir du support d'enregistrement magnétique, et comportant en outre : un filtre passe-haut et un moyen, qui peut fonctionner pendant la reproduction, pour faire varier la fréquence de coupure du filtre passe-haut suivant la phase du signal pilote détectée à partir du signal reproduit, le filtre passe-haut séparant un signal de luminance reproduit d'un signal multiplex à division de fréquences reproduit à partir du support d'enregistrement magnétique.

6. Un appareil suivant la revendication 4 ou 5, adapté en outre pour fonctionner en mode à large bande et en mode standard, la largeur de bande de la fréquence du signal de luminance étant plus petite que la fréquence de la sous-porteuse de couleur dans le mode standard, et une partie du signal de luminance ayant une fréquence égale ou supérieure à la fréquence de la sous-porteuse de couleur dans le mode à large bande, et dans lequel ledit moyen pour ajouter un signal pilote ne peut fonctionner que dans le mode à large bande.

7. Un appareil suivant l'une quelconque des précédentes revendications, dans lequel ledit moyen pour ajouter un signal pilote est adapté à l'addition du signal pilote pendant une période correspondant à une période de supression d'impulsion horizontale ou verticale du signal de couleur dans le signal à enregistrer.

8. Un appareil suivant l'une quelconque des revendications 1 à 6, dans lequel ledit moyen pour ajouter un signal pilote est adapté à l'addition du signal pilote pendant une période correspondant à une période de suppression d'impulsion horizontale ou verticale ou une position de salve de couleur du signal de luminance dans le signal à enregistrer.

9. Un appareil d'enregistrement d'un signal multiplex à division de fréquences sur un support d'enregistrement magnétique, le signal multiplex à division de fréquences comportant un signal de luminance modulé en fréquence et un signal de couleur abaissé en fréquence combinés dans un processus de multiplexage à division de fréquences, le signal de luminance modulé en fréquence étant dérivé d'un signal de luminance par un processus de modulation de fréquence, le signal de couleur abaissé en fréquence étant dérivé d'un signal de porteuse de chrominance par un processus d'abaissement de fréquence, et une partie du signal de luminance ayant une fréquence égale ou supérieure à la fréquence de la sous-porteuse de couleur, le procédé comprenant les étapes de :
ajouter sélectivement un signal pilote au signal à enregistrer suivant si une quantité de composantes du signal de luminance haute fréquence contenues dans le signal de couleur dans le signal à enregistrer est inférieure à une quantité de référence, ou non.

10. Un procédé suivant la revendication 9, comportant en outre les étapes additionnelles de reproduction du signal multiplex à division de fréquences à partir du support d'enregistrement magnétique ;
variation de la fréquence de coupure d'un filtre passe-haut suivant si le signal pilote est présent ou absent dans le signal reproduit à partir du support d'enregistremnt magnétique ; et
séparation du signal de luminance reproduit du signal multiplex à division de fréquences reproduit à partir du support d'enregistrement magnétique en utilisant le filtre passe-haut.

11. Un procédé d'enregistrement d'un signal multiplex à division de fréquences sur un support d'enregistrement magnétique, le signal multiplex à division de fréquences comportant un signal de luminance modulé en fréqence et un signal de couleur abaissé en fréquence combinés dans un processus de multiplexage à division de fréquences, le signal de luminance modulé en fréquence étant dérivé d'un signal de luminance par un processus de modulation de fréquence, le signal de couleur abaissé en fréquence étant dérivé d'un signal de porteuse de chrominance par un processus d'abaissement de fréquence, et une partie du signal de luminance ayant une fréquence égale ou supérieure à la fréquence de la sous-porteuse de couleur du signal de couleur abaissé en fréquence, le procédé comportant les étapes de :
ajouter un signal pilote au signal à enregistrer, la phase du signal pilote dépendant de si une composante de signal de luminance haute fréquence est présente, ou non, dans le signal de couleur dans le signal à enregistrer.

12. Un procédé suivant la revendication 11, comportant les étapes supplémentaires de reproduction du signal multiplexé à division de fréquences à partir du support d'enregistrement magnétique ;
variation de la fréquence de coupure d'un filtre passe-haut suivant la phase du signal pilote détectée à partir du signal reproduit, et
séparation du signal de luminance reproduit du signal multiplexé à division de fréquences reproduit à partir du support d'enregistrement magnétique en utilisant le filtre passe-haut.
